# FASCICULE DE BREVET EUROPEEN

(11) **EP 1 815 173 B1**
(45) Date de publication et mention de la délivrance du brevet: **11.08.2010**
(21) Numéro de dépôt: 05814887.5
(22) Date de dépôt: 07.11.2005
(51) Int. Cl.: F16K 31/06

(54) **VANNE AYANT UN CORPS INTEGRANT UN FILTRE.**
EINEN MIT EINEM FILTER VERSEHENEN KÖRPER UMFASSENDES VENTILSYSTEM
VALVE SYSTEM COMPRISING A FILTER-EQUIPPED BODY

(30) Priorité: 09.11.2004 FR 0411909
(43) Date de publication de la demande: 08.08.2007
(73) Titulaire: Valeo Systèmes de Contrôle Moteur, 95520 Osny (FR)
(72) Inventeur: VAZ DE AZEVEDO, José, F-63320 Saint-Vincent (FR)
(74) Mandataire: Rolland, Jean-Christophe
(86) Numéro de dépôt international: PCT/FR2005/002768
(87) Numéro de publication internationale: WO 2006/051205

(56) Documents cités:
- GB-A- 754 528
- US-A- 1 633 320
- US-A1- 2003 085 168
- US-A1- 2003 172 974

## Description

La présente invention concerne une vanne utilisable notamment pour réguler le débit d'un fluide circulant dans un circuit de transport de fluide. Cette vanne est par exemple utilisable dans un circuit d'alimentation d'un moteur thermique en carburant.

### ARRIERE PLAN DE L'INVENTION

Une vanne comporte généralement un corps délimitant un conduit et un clapet monté mobile dans le corps entre une position d'obturation du conduit et une position de dégagement du conduit. Un organe d'actionnement, par exemple électromagnétique, est monté sur le corps pour déplacer le clapet entre ces positions d'obturation et de dégagement. Il est également prévu un organe de filtrage s'étendant dans le conduit pour empêcher que des particules ne viennent encrasser et bloquer la vanne ou détériorer des équipements situés en aval de la vanne. Ces particules proviennent par exemple des charbons actifs utilisés dans un dispositif de recyclage des vapeurs de carburant ("canister") en amont de la vanne ou sont formés par des copeaux métalliques résultant de l'usure d'un composant du circuit en amont de la vanne.

Il est connu des vannes dont le corps incorpore un organe de filtrage directement issu du moulage du corps, voir par exemple US 2003/0172974. Cet organe de filtrage comprend généralement des picots espacés qui ont des portions en regard définissant des passages de filtration. La largeur minimale des passages de filtration est définie par l'épaisseur minimale du moule à cet endroit. Une telle vanne peut donc ne pas être adaptée à des circuits dans lesquels risquent de se trouver des particules de dimensions inférieures à la largeur minimale ainsi définie. US 1633 320 décrit une vanne avec filtre, selon le préambule de la revendication 1.

### OBJET DE L'INVENTION

Il serait donc intéressant de disposer d'une vanne incorporant d'une façon peu onéreuse un moyen de filtrage qui ne soit pas affecté par la limitation ci-dessus énoncée.

### BREVE DESCRIPTION DE L'INVENTION

A cet effet, on prévoit, selon l'invention, une vanne comportant un corps délimitant un conduit, un organe de filtrage définissant des passages de filtration s'étendant dans le conduit et un clapet monté mobile dans le corps entre une position d'obturation du conduit et une position de dégagement du conduit, l'organe de filtrage comprenant deux parties de filtre qui ont des profils complémentaires et qui sont solidaires respectivement du corps et d'un élément support fixé dans le corps de telle manière que les passages de filtration soient définis entre des portions en regard des profils complémentaires, les profils complémentaires comprenant des picots emboîtés les uns entre les autres.

Ainsi, les dimensions des passages de filtration sont le résultat du positionnement relatif des deux parties de filtre. Il n'y a donc pas de limite inférieure à ces dimensions en dehors de celles liées aux tolérances de fabrication et de montage. Il est donc possible d'avoir des passages de filtration de très petites dimensions. En outre, l'organe de filtration a une structure relativement simple.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

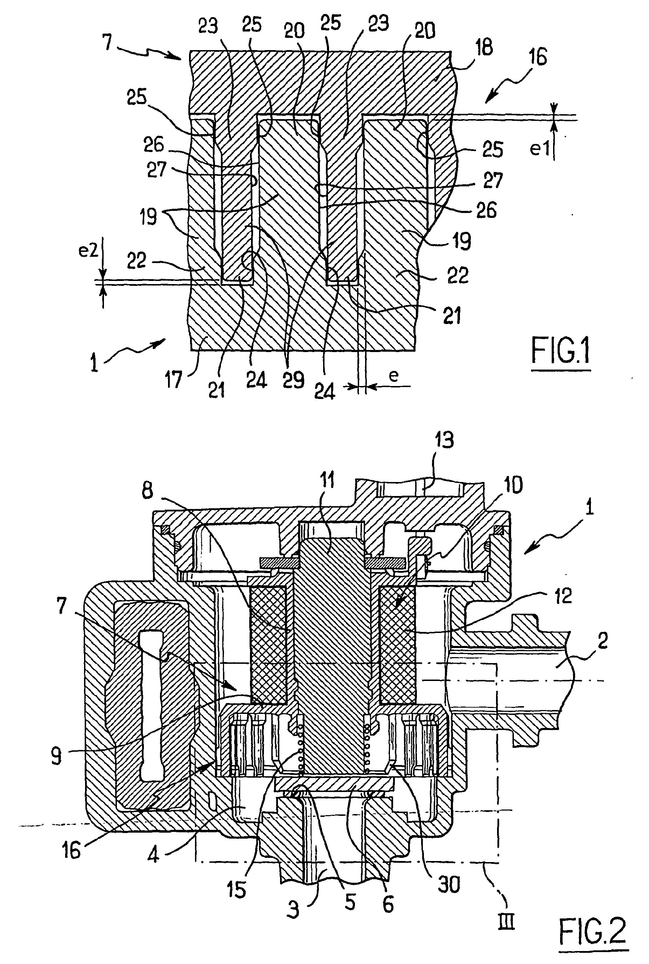

- la figure 1 est une vue partielle en coupe de deux parties de filtre illustrant le principe de l'invention,
- la figure 2 est une vue partielle en coupe d'une vanne conforme à l'invention,

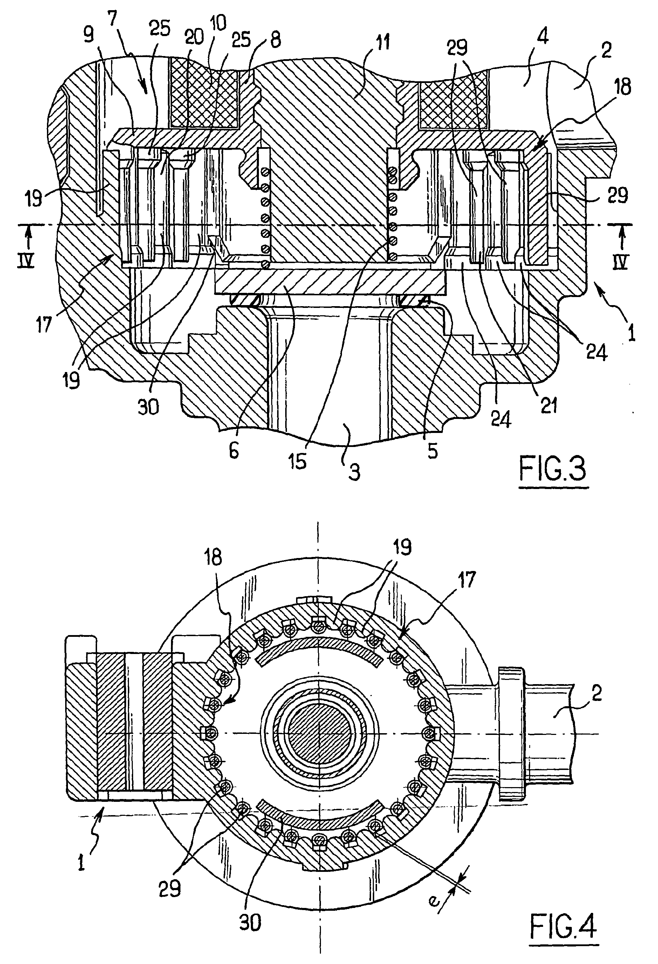

- la figure 3 est une vue de détail de la zone III de la figure 2,
- la figure 4 est une vue en coupe selon la ligne IV-IV de la figure 3.

### DESCRIPTION DETAILLEE DE L'INVENTION

En référence aux figures, la vanne conforme à l'invention comprend un corps généralement désigné en 1 délimitant un conduit d'entrée 2 et un conduit de sortie 3 débouchant tous deux par une extrémité dans un logement 4. Ladite extrémité du conduit de sortie 3 définit un siège 5 pour un clapet 6, connu en lui-même, en matériau magnétique.

Le clapet 6 est supporté par un élément support généralement désigné en 7 qui est fixé dans le logement 4 en regard du siège 5 dans l'axe du conduit de sortie 3.

L'élément support 7 comprend une partie tubulaire 8 dont une extrémité est terminée par une collerette 9 qui s'étend du côté du conduit de sortie 3.

A l'élément support 7 est associé un organe d'actionnement électromagnétique 10 du clapet 6. L'organe d'actionnement électromagnétique 10, connu en lui-même, comporte un noyau 11 reçu dans la partie tubulaire 8 et une bobine 12 qui s'étend de façon connue en elle-même autour de la partie tubulaire 8 et qui est reliée à un connecteur électrique 13 permettant le raccordement de la bobine 12 à une source d'alimentation en courant électrique non représentée. L'organe d'actionnement 10 comprend également une cloche de bouclage du flux 30. Le noyau 11 a une extrémité en saillie de la collerette 9. L'élément support 7 est ici surmoulé sur le noyau 11 et la bobine 12 est réalisée par enroulement d'un conducteur directement sur l'élément support 7.

Le clapet 6 est guidé dans le logement 4 de façon connue en soi pour coulisser entre une position d'obturation dans laquelle le clapet 6 est en appui contre le siège 5 et une position de dégagement dans laquelle le clapet 6 est écarté du siège 5. Un ressort hélicoïdal 15 s'étend autour de l'extrémité en saillie du noyau 11, entre la collerette 9 et le clapet 6, pour forcer le clapet 6 en appui contre le siège 5.

On comprend que, de manière classique, lorsque la bobine 12 est excitée, elle engendre dans le noyau 11 un flux magnétique qui attire le clapet 6 contre l'extrémité en saillie du noyau 11 à l'encontre de l'effort exercé par le ressort hélicoïdal 15. Le clapet 6 est alors en position de dégagement.

La vanne conforme à l'invention incorpore un organe de filtrage généralement désigné en 16. L'organe de filtrage comprend deux parties de filtre 17, 18 qui ont des profils complémentaires et qui sont solidaires respectivement du corps 1 et de l'élément support 7 de telle manière que des passages de filtration soient définis entre des portions en regard des profils complémentaires des parties de filtre.

La partie de filtre 17 comprend des picots 19 qui s'étendent dans le logement 4 parallèlement à la direction de coulissement du clapet 6. Ces picots 19 sont réalisés en une seule pièce avec le corps 1.

La partie de filtre 18 comporte des picots 29 qui s'étendent depuis le pourtour de la collerette 9 selon une direction parallèle à la direction de coulissement du clapet 6.

Les picots 19, 29 comportent chacun une extrémité libre 20, 21 respectivement, et une extrémité 22, 23 solidaire du corps 1 et de la collerette 9 respectivement. Les extrémités 22, 23 sont pourvues d'une portion de centrage 24, 25. Les picots 19, 29 s'étendent selon deux cercles concentriques à l'axe du clapet 6 et au voisinage de celui-ci, et ont leurs extrémités libres 20, 21 reçues entre les portions de centrage 24, 25 des picots adjacents. On évite ainsi que les picots soient mal centrés les uns par rapport aux autres au point qu'un passage de filtration de largeur supérieure à celle prévue n'apparaisse sur un des côtés des picots. Il est ainsi défini entre les surfaces latérales 26, 27 des picots 19, 29 des passages de filtration d'épaisseur e.

En outre, les picots 19 ont leur extrémité libre 20 qui s'étend à distance de la collerette 9 tandis que les picots 29 ont leur extrémité libre 21 qui s'étend à distance du corps 1. Il est ainsi défini des passages de filtration d'épaisseurs respectives e1 et e2. Cet agencement permet d'avoir le maximum de passages de filtration de manière à ne pas restreindre le débit du fluide par rapport au débit maximal permis par le clapet 6 en position de dégagement.

Ainsi, le fluide qui provient du conduit d'entrée 2, passe par les passages de filtration avant d'arriver au conduit de sortie 3. Ceci permet de limiter le risque que des particules ne viennent perturber le mouvement du clapet 6 ou perturber le fonctionnement d'équipements disposés en aval de la vanne.

Bien entendu, l'invention n'est pas limitée au mode de réalisation décrit et on peut y apporter des variantes de réalisation sans sortir du cadre de l'invention tel que défini par les revendications.

En particulier, l'organe de filtration peut être agencé dans le conduit d'entrée 2 ou dans le conduit de sortie 3, l'élément support pouvant n'avoir comme seule et unique fonction que de constituer l'une des parties de filtre.

Les parties de filtre peuvent également avoir des profils complémentaires de formes différentes de ceux décrits. Ainsi, les profils complémentaires peuvent avoir une forme en créneau ou en dent de scie. Les passages de filtration peuvent en outre être agencés uniquement aux extrémités des picots ou entre leurs surfaces latérales.

Par ailleurs, la structure de la vanne peut être différente de celle décrite. L'organe d'actionnement peut être un organe d'actionnement mécanique positionné hors du logement 4. L'élément support peut alors avoir en outre une forme de coupelle dont la périphérie est agencée en profil complémentaire pour former une des parties de filtre.

Les picots peuvent en outre s'étendre radialement.

Les picots peuvent avoir une portion centrale de centrage ou des portions de centrage aux deux extrémités. Les picots peuvent également ne pas avoir de portions de centrage en particulier si les picots sont de faible hauteur.

## Revendications

1. Vanne comportant un corps (1) délimitant un conduit (2), un organe de filtrage (16) définissant des passages de filtration (e, e1, e2) et s'étendant dans le conduit, et un clapet (6) monté mobile dans le corps entre une position d'obturation du conduit et une position de dégagement du conduit, l'organe de filtrage comprenant deux parties de filtre (17, 18) qui ont des profils complémentaires et qui sont solidaires respectivement du corps et d'un élément support (7) fixé dans le corps de telle manière que les passages de filtration soient définis entre des portions en regard (26, 27) des profils complémentaires, **caractérisée en ce que** les profils complémentaires comprennent des picots (19, 29) emboîtés les uns entre les autres.

2. Vanne selon la revendication 1, **caractérisée en ce que** les picots (19, 29) sont disposés en cercles concentriques autour du clapet (6).

3. Vanne selon la revendication 1 ou la revendication 2, **caractérisée en ce que** les picots (19, 29) sont parallèles à une direction de coulissement du clapet (6) entre les position d'obturation et de dégagement.

4. Vanne selon l'une quelconque des revendications 1 à 3, **caractérisée en ce que** chaque picot (19, 29) d'au moins une partie de filtre (17) comporte au moins une portion de centrage (24, 25) du picot par rapport à deux picots (19, 29) adjacents de l'autre partie de filtre (18).

5. Vanne selon la revendication 1, **caractérisée en ce qu'**elle comprend un organe d'actionnement (10) du clapet (6) monté dans le corps (1), l'organe d'actionnement étant solidaire de l'organe support (7) monté dans l'axe du clapet (6).

6. Vanne selon la revendication 5, **caractérisée en ce que** l'organe support (7) comprend au voisinage du clapet (6) une collerette (9) ayant un pourtour à partir duquel s'étend le profil complémentaire de la partie de filtre (18) correspondante.

## Claims

1. Valve comprising a body (1) delimiting a duct (2), a filtering member (16) defining filtration passageways (e, e1, e2) and extending into the duct, and a valve element (6) mounted movably in the body between a position of closing off the duct and a position of opening up the duct, the filtering member comprising two filter portions (17, 18) which have matching profiles and which are secured respectively to the body and to a supporting element (7) fastened in the body so that the filtration passageways are defined between facing portions (26, 27) of the matching profiles, **characterized in that** the matching profiles comprise posts (19, 29) interlocking with one another.

2. Valve according to Claim 1, **characterized in that** the posts (19, 29) are placed in concentric circles about the valve element (6).

3. Valve according to Claim 1 or Claim 2, **characterized in that** the posts (19, 29) are parallel to a direction of sliding of the valve element (6) between the closed-off and opened-up positions.

4. Valve according to any one of Claims 1 to 3, **characterized in that** each post (19, 29) of at least one filter portion (17) comprises at least one portion (24, 25) for centring the post relative to two adjacent posts (19, 29) of the other filter portion (18).

5. Valve according to Claim 1, **characterized in that** it comprises a member (10) for actuating the valve element (6) mounted in the body (1), the actuation member being attached to the support member (7) mounted in the axis of the valve element (6).

6. Valve according to Claim 5, **characterized in that** the support member (7) comprises, in the vicinity of the valve element (6), a collar (9) having a periphery from which the matching profile of the corresponding filter portion (18) extends.

## Patentansprüche

1. Ventil, das einen Körper (1), der einen Kanal (2) begrenzt, ein Filterorgan (16), das Filterdurchlässe (e, e1, e2) definiert und sich im Kanal erstreckt, und eine Ventilklappe (6) aufweist, die im Körper zwischen einer Stellung des Verschließens des Kanals und einer Stellung der Freigabe des Kanals beweglich montiert ist, wobei das Filterorgan zwei Filterteile (17, 18) enthält, die komplementäre Profile haben und mit dem Körper bzw. mit einem Trägerelement (7) fest verbunden sind, das so im Körper befestigt ist, dass die Filterdurchlässe zwischen einander gegenüberliegenden Abschnitten (26, 27) der komplementären Profile definiert sind, **dadurch gekennzeichnet, dass** die komplementären Profile ineinandergefügte Zapfen (19, 29) enthalten.

2. Ventil nach Anspruch 1, **dadurch gekennzeichnet, dass** die Zapfen (19, 29) in konzentrischen Kreisen um die ventilklappe (6) herum angeordnet sind.

3. Ventil nach Anspruch 1 oder Anspruch 2, **dadurch gekennzeichnet, dass** die Zapfen (19, 29) zu einer Gleitrichtung der Ventilklappe (6) zwischen den Verschluss- und Freigabestellungen parallel sind.

4. Ventil nach einem der Ansprüche 1 bis 3, **dadurch gekennzeichnet, dass** jeder Zapfen (19, 29) mindestens eines Filterteils (17) mindestens einen Zentrierabschnitt (24, 25) des Zapfens bezüglich von zwei benachbarten Zapfen (19, 29) des anderen Filterteils (18) aufweist.

5. Ventil nach Anspruch 1, **dadurch gekennzeichnet, dass** es ein Betätigungsorgan (10) der Ventilklappe (6) aufweist, das in den Körper (1) montiert ist, wobei das Betätigungsorgan fest mit dem Trägerorgan (7) verbunden ist, das in der Achse der Ventilklappe (6) montiert ist.

6. Ventil nach Anspruch 5, **dadurch gekennzeichnet, dass** das Trägerorgan (7) in der Nähe der Ventilklappe (6) einen Kragen (9) aufweist, der einen Umfang hat, von dem ausgehend sich das komplementäre Profil des entsprechenden Filterteils (18) erstreckt.
